## Europäisches Patentamt

## European Patent Office

## Office européen des brevets

(19)

(11) Veröffentlichungsnummer : **0 099 937**
**B1**

(12) **EUROPÄISCHE PATENTSCHRIFT**

(45) Veröffentlichungstag der Patentschrift :
12.11.86

(51) Int. Cl.⁴ : **G 01 M 1/22**

(21) Anmeldenummer : 82106805.3

(22) Anmeldetag : 28.07.82

(54) Unwuchtmesseinrichtung zur Bestimmung der Unwucht nach Lage und Grösse.

(43) Veröffentlichungstag der Anmeldung :
08.02.84 Patentblatt 84/06

(45) Bekanntmachung des Hinweises auf die Patenterteilung : 12.11.86 Patentblatt 86/46

(84) Benannte Vertragsstaaten :
DE FR GB IT

(56) Entgegenhaltungen :
EP-A- 0 027 848
DE-A- 2 756 829
US-A- 4 046 017
PATENTS ABSTRACTS OF JAPAN, Band 6, Nr. 84(P-117)(962), 22. Mai 1982
TECHNICAL REVIEW, Nr. 3, 1979, Seiten 3-26, Naerum, DK. J.F.G. WORT: "The rationale of dynamic balancing by vibration measurement"
"IEEE TRANSACTIONS ON CIRCUITS AND SYSTEMS", vol. CAS-25, nr. 12, December 1978, Seiten 1014-1020

(73) Patentinhaber : Schenck-Auto-Service-Geräte GmbH
Landwehrstrasse 63 Postfach 4129
D-6100 Darmstadt (DE)

(72) Erfinder : Maus, Otfrid, Ing.-grad.
Im Fiedlersee 34
D-6100 Darmstadt (DE)

(74) Vertreter : Dallhammer, Herbert, Dipl.-Ing.
c/o Schenck-Auto-Service-Geräte GmbH Patentabteilung Postfach 4129 Landwehrstrasse 63
D-6100 Darmstadt (DE)

## Beschreibung

Die Erfindung betrifft eine Unwuchtmeßeinrichtung zur Bestimmung der Unwucht nach Lage und Größe für eine Auswuchtmaschine mit einem Antriebsmotor, Schwingungsumformern, einer den auszuwuchtenden Rotor tragenden Spindel, mit an dieser angeordneten Inkrementscheibe mit einer Analogfilterschaltung für Analogsignale zum Aussieben von Störschwingungen durch Frequenzsteuerung mit einer hoch liegenden Steuerfrequenz.

Bei allen Auswuchtmaschinen ist es notwendig, Störschwingungen, die von der Lagerung des auszuwuchtenden Körpers, dem Antrieb für den auszuwuchtenden Körper oder von Luftschwingungen des Körpers selbst herrühren, in ihrem Einfluß auf die Unwuchtanzeige nach Lage und Größe zu beseitigen. Hierzu hat sich neben dem multiplikativen Meßverfahren bei einfacheren Maschinen z. B. auch bei Radauswuchtmaschinen die Verwendung elektrischer Filter eingebürgert. Hierfür werden in der Regel Band-, Hoch- oder Tiefpässe verwendet.

Allen derartigen Schaltungen haftet jedoch der Nachteil an, daß bereits bei geringen Abweichungen der Auswuchtdrehzahl von der vorgegebenen Mittenfrequenz der Filteranordnung erhebliche Phasenfehler des übertragenen Meßsignals eintreten. Da Unwuchtmeßeinrichtungen an Auswuchtmaschinen nicht nur die Unwuchtgröße sondern auch die Position der Unwucht am auszuwuchtenden Körper in einer oder mehreren Ebenen anzeigen sollen, wirkt sich jeder Fehler in der Phasenübertragung als ein Fehler bei der Korrektur der Unwucht am auszuwuchtenden Körper aus.

Elektrische Filter lassen sich mit verschiedener Filtergüte (Q) auslegen, wobei gerade die Filter mit der besten Selektionswirkung die größte Phasensteilheit haben. Wird ein elektrisches Filter hoher Filtergüte in Unwuchtmeßeinrichtungen für Auswuchtmaschinen verwendet, so ist dafür zu sorgen, daß der Antriebsmotor die vorbestimmte Meßdrehzahl für die Untersuchung des Rotationskörpers sehr genau einhält. Drehzahlabweichungen führen somit gerade bei elektrischen Filtern hoher Filtergüte zu großen Phasenfehlern. Demgemäß wird derzeit ein Kompromiß zwischen Filtergüte und Phasenfehler angestrebt um geringe Drehzahlschwankungen im Bereich der Meßdrehzahl zulassen zu können ohne daß der Phasenfehler, der zu einem Fehlausgleich der Unwucht führt, zu groß wird.

Es wäre insoweit naheliegend, phasengesteuerte Regelkreise « phase locked loop » (PLL) zur Hilfssteuerung von Filtern auf die Auswuchtdrehzahl zu verwenden. Da jedoch die Phase in solchen Regelkreisen gerade als Regelgröße verwendet wird, entstehen bei den sogenannten Nachlauffiltern « PLL Filter follower » Phasenfehler, deren Größe von der Abweichung der Filtermittenfrequenz von der Signalfrequenz abhängig sind. Unter Signalfrequenz wird hierbei die sich im allgemeinen von Umlauf zu Umlauf des zu untersuchenden Rotors ändernde Drehfrequenz des auszuwuchtenden Körpers verstanden. Eine derartige Schaltungsanordnung ergibt zwangsläufig einen Phasenfehler, da der Regelkreis einen Wert für den Phasenfehler benötigt um den Unwuchtwinkelwert zu regeln, wobei der Phasenfehler den Wert Null nicht erreichen darf. Damit ist auch diese Einrichtung nicht geeignet einen von Phasenfehler freien Unwuchtwinkelwert darzustellen.

Durch die U. K. Patent Application 20 41 538 ist ferner eine Einrichtung bekannt geworden, um diese Phasenfehler durch aufwendige Schaltungen nachträglich zu kompensieren: Nach dieser Druckschrift wird über eine besondere Einrichtung der Phasenfehler künstlich ermittelt und dann mit Hilfe einer Mikroprozessorrechenschaltung zur Korrektur dem gemessenen, an sich falschen Winkelwert hinzugefügt. Aus dem Artikel : « The nationale of dynamic balancing by vibration measurement » (J.F.G. WORT) im « Technical Review » No 3, 1979, Seiten 3-26 ist auch eine Umwuchtmeßeinrichtung bekannt, in der Filterschaltungen von einer Steuerfrequenz gesteuert werden. Ausgehend davon, liegt der vorliegenden Erfindung die Aufgabe zugrunde einen von Phasenfehlern freien Winkelbezug für die Unwuchtgröße darzustellen, der insbesondere für einen Mehrebenenausgleich so genau ist, damit die in einer Ebene ausgeglichene Unwuchtgröße die Bestimmung und den Ausgleich der Unwucht in der anderen Ausgleichsebene nicht beeinflußt. Diese Aufgabe wird erfindungsgemäß dadurch gelöst, daß ein besonderer Steuereingang der aus geschalteten Kondensatoren aufgebauten Filterschaltung pro Umlauf der Inkrementscheibe mit Impulsen aus jedem Inkrement der Inkrementscheibe angesteuert wird. Damit wird auch bei variabler Umlauffrequenz des auszuwuchtenden Rotors das Filter mit einer sehr hohen Steuerfrequenz stets auf diese Umlauffrequenz synchron gesteuert. Damit treten die in den Nachlauffiltern zwingend vorhandenen Phasenfehler nicht mehr auf und es entsteht auch bei sich ändernder Umlauffrequenz ein stets genau reproduzierbares Signal für die Unwuchtgröße. So erhält die Unwuchtmeßeinrichtung sowohl eine genaue Information über die am Körper zu beseitigende Unwuchtgröße als auch eine Information über die genaue Winkellage der Unwucht zu einem Bezugspunkt am Körper.

Zufolge der nicht mit Phasenfehlern bahafteten Messung der Unwuchtgröße in der einen Ebene wird bei Bestimmung der Unwucht nach Lage und Größe auch in der zweiten Ausgleichsebene kein zusätzlicher Phasenfehler hervorgerufen, der durch einen Phasenfehler aus der ersten Ebene in die zweite Ebene übertragen werden könnte.

Anhand der nachfolgenden Zeichnung wird eine bevorzugte Ausgestaltung des Erfindungsgegenstandes näher erläutert. Es zeigen :

Figur 1 eine Auswuchtmaschine schematisch dargestellt

Figur 2 eine elektrische Schaltungsanordnung in einer erfindungsgemäßen Unwuchtmeßeinrichtung.

In den Figuren werden gleiche Bauteile mit denselben Bezugsziffern bezeichnet.

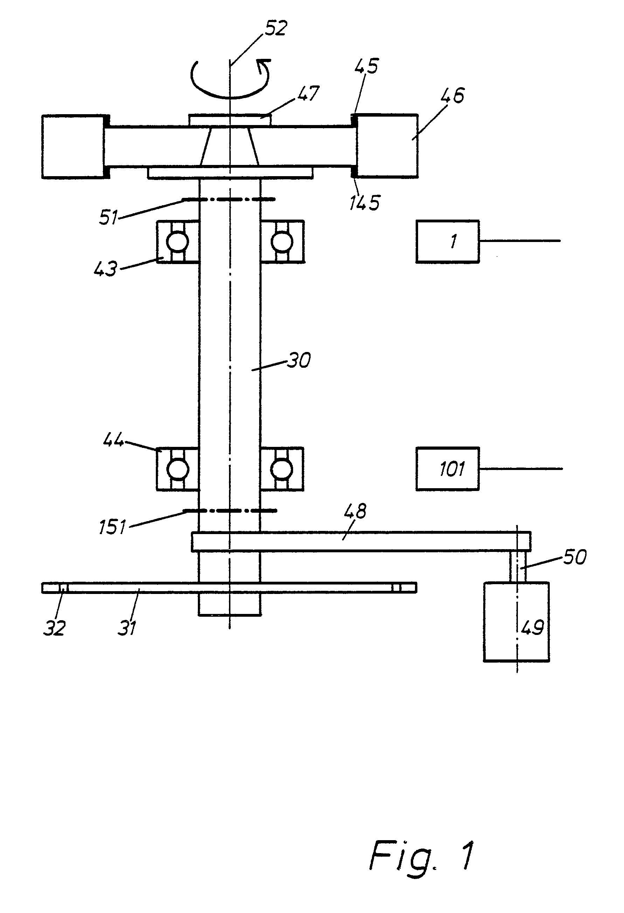

Gemäß Fig. 1 wird eine Spindel 30 von einem Antriebsmotor 49 über eine Motorwelle 50 und einen Riementrieb 48 angetrieben. Die Spindel 30 trägt an ihrem einen Ende eine Inkrementscheibe 31, die mit Inkrementen 32 versehen ist. Im einfachsten Falle handelt es sich um Bohrungen, die im Bereich des Randes der Inkrementscheibe 31 angeordnet sind und die zur Bestimmung der Rotation und der Rotationsfrequenz herangezogen werden. Die Anzahl der am Umfang der Inkrementscheibe 31 angeordneten Inkremente 32 ist beliebig ; beispielsweise kann pro Grad auf der Inkrementscheibe 31 eine Erhöhung als Merkmal vorgesehen sein. Bei Abtastung einer derartigen Inkrementanordnung würden 360 Impulse pro Umdrehung der Inkrementscheibe weitergegeben. Es ist auch möglich die Anzahl der Inkremente auf Dualzahlen abzustimmen.

Am anderen Ende der Spindel 30, die in einer Lagerung 43, 44 gelagert ist, ist eine Aufnahme 47 für die Aufnahme eines auszuwuchtenden Rotors 46 vorgesehen. Der auszuwuchtende Rotor 46 trägt eine erste Ausgleichsebene 45 und eine zweite Ausgleichsebene 145, an denen die für jede Ebene gemessenen Unwuchten nach Lage und Größe durch Zufügen oder Wegnehmen von Material unabhängig voneinander ausgeglichen werden können.

Zur Bestimmung der Unwucht für die einzelnen Ebenen nach Lage und Größe sind gemäß Fig. 1 senkrecht zur Spindelachse 52 eine erste Meßebene 51 und eine zweite Meßebene 151 vorhanden, in denen die durch die Schwingung des auszuwuchtenden Rotors 46 hervorgerufenen Auslenkungen von einem Schwingungsumformer 1 für die erste Meßebene 51 und von einem Schwingungsumformer 101 für die zweite Meßebene 151 aufgenommen werden. Die vom Schwingungsumformer 1 aufgenommenen Signale werden nach Verarbeitung, wie anschließend näher dargestellt, als die in der ersten Ausgleichsebene 45 zu beseitigende Unwucht nach Lage und Größe dargestellt, während die vom Schwingungsumformer 101 aufgenommenen Signale als die in der zweiten Ausgleichsebene 145 zu beseitigende Unwucht nach Lage und Größe dargestellt wird.

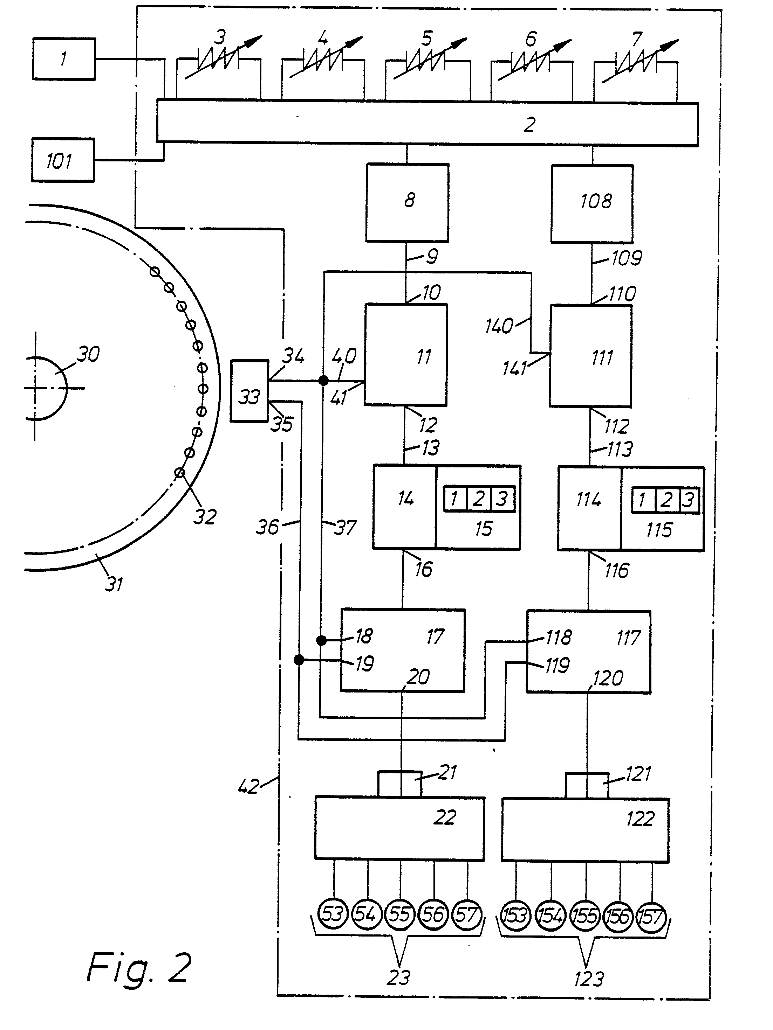

In Fig. 2 wird die erfindungsgemäße Unwuchtmeßeinrichtung dargestellt, die im wesentlichen in einem Gehäuse 42 angeordnet ist. Die vom Schwingungsumformer 1 für die erste Meßebene und die vom Schwingungsumformer 101 für die zweite Meßebene weitergegebenen Signale werden getrennt einer Einstellschaltung 2 zugeführt. Die Einstellschaltung 2 trägt außerdem einen Meßebeneneinsteller 3 an dem der Abstand zwischen der ersten Meßebene 51 und der ersten Ausgleichsebene 45 eingestellt wird. Weiterhin trägt die Einstellschaltung 2 einen Ausgleichsebeneneinsteller 4 an dem der Abstand zwischen den beiden Ausgleichsebenen 45 und 145 eingestellt wird ; desweiteren einen Abstandeinsteller 5, der auf den Abstand zwischen zweiter Ausgleichsebene und zweiter Meßebene eingestellt wird ; einen ersten Radiuseinsteller 6 zur Einstellung des Ausgleichsradius der ersten Ausgleichsebene 45 und einen zweiten Radiuseinsteller zur Einstellung des Ausgleichsradius der zweiten Ausgleichsebene 145. Durch diese Einstellungen werden die Signale der Schwingungsumformer 1 und 101 in der Einstellschaltung elektrisch verknüpft und anschließend für die erste Ausgleichsebene einer Schaltung 8 zur Beseitigung der Frequenzabhängigkeit des Umwuchtgrößensignals von der Auswuchtdrehzahl zugeführt und für die zweite Ausgleichsebene 145 einer weiteren Schaltung 108 zur Beseitigung der Frequenzabhängigkeit des Unwuchtgrößensignals von der Auswuchtdrehzahl ebenfalls zugeführt. Die derart aufbereiteten elektrischen Signale werden über eine Verbindungsleitung 9 bzw. 109 an einen Eingang 10 bzw. 110 einer Analogfilterschaltung 11 bzw. 111 für Analogsignale zugeführt. Diese Analogfilterschaltungen 11 bzw. 111 werden über Steuereingänge 41 bzw. 141 von einer Abtastvorrichtung 33 zur gleichzeitigen Abtastung von mindestens zwei um jeweils eine halbe Teilung versetzten Inkrementen ausgehende Signale zugeführt. Die Abtastvorrichtung 33 tastet die auf der Inkrementscheibe 31 angebrachten Inkremente 32 beim Umlauf der Scheibe ab. Durch die gleichzeitige Abtastung von mindestens zwei um jeweils eine halbe Teilung versetzte Inkremente stehen am einen Ausgang 34 der Abtastvorrichtung eine Impulsfolge an, die der ersten Inkrementenfolge entspricht und an einem weiteren Ausgang 35 der Abtastvorrichtung 33 eine Impulsfolge, die der um eine halbe Teilung versetzten Inkrementenfolge entspricht. Die erste Impulsfolge wird über Zuleitungen 40 bzw. 140 den Steuereingängen 41 bzw. 141 der Analogfilterschaltung 11, 111 zugeführt, und steuern somit in der Analogfilterschaltung 11 bzw. 111 die automatische Nachstellung der in der Analogfilterschaltung 11 bzw. 111 angeordneten Filter auf die jeweils augenblickliche Umlauffrequenz des mit der Spindel 30 verbundenen auszuwuchtenden Rotationskörpers 46 also mit einer hoch liegenden Steuerfrequenz. An Signalausgängen 12 bzw. 112 der Analogfilterschaltung stehen somit exakt auf die Umlauffrequenz gefilterte Signale an, die über Leitungen 13 bzw. 113 Gleichrichterschaltungen 14 bzw. 114 mit Nulldurchgangsdetektoren zugeführt werden. An diese Gleichrichterschaltungen 14 bzw. 114 sind Anzeigevorrichtungen 15 bzw. 115 für die Unwuchtgröße angeschlossen. In diesen Anzeigevorrichtungen wird die Unwuchtgröße angezeigt.

Die über die Leitung 13 kommende, mittels Filter mit geschalteten Kondensatoren innerhalb der Analogfilterschaltung 11 bzw. 111 erzeugte Sinusspannung wird auch über einen Ausgang 16 bzw. 116 vom in der Gleichrichterschaltung mit Nulldurchgangsdetektor 14 bzw. 114 zum Nullsetzen nachgeschalteter Vorwärts-Rückwärts-Ringzähler 17 bzw. 117 benutzt. Das Rücksetzen dieser Ringzähler geschieht beim Nulldurchgang des Sinussignals, also dann wenn die mit Unwucht versehene Stelle am Schwingungsumformer 1 für die eine Ebene bzw. Schwingungsumformer 101 für die andere Ebene vorbeiläuft. Damit werden die über einen Eingang 18 bzw. 118 des Vorwärts-Rückwärts-Zählers 17 bzw. 117 eingezählten Impulse aus der Abtastvorrichtung 33 über deren Ausgang 34 und die Zuleitung 37 eingezählten Impulse auf den Zählerstand « Null » rückgesetzt. Während des Meßvorgangs werden also bei jeder Umdrehung des auszuwuchtenden Rotors 46, die über den Eingang 18 bzw. 118 kommenden Impulse aus der Abtastvorrichtung eingezählt und anschließend rückgesetzt. Ist der Meßvorgang beendet, werden durch Abschalten der Maschine keine Unwuchtschwingungen von den Schwingungsumformern 1 bzw. 101 weitergegeben, so daß auch das Rücksetzen des Vorwärts-Rückwärts-Ringzählers 17 bzw. 117 unterbleibt. Damit ist die Unwuchtwinkellage dort festgehalten. Nach Abstellen der Maschine wird beim Eindrehen dieser in die Unwuchtwinkellage über den Ausgang 35, der um eine halbe Teilung versetzten Inkrementenfolge aus der Abtastvorrichtung 33 die jeweiligen Impulse über eine Leitung 36, Eingängen 19 bzw. 119 den Vorwärts-Rückwärts-Ringzählern 17, 117 zugeführt. Damit werden von den Ausgängen 20 bzw. 120 der Vorwärts-Rückwärts-Ringzähler 17 bzw. 117 Winkelinformationen, Decodierschaltungen 21 bzw. 121 zugeführt, die über Anzeigetreiber 22 bzw. 122 Unwuchtwinkelanzeigen 23 bzw. 123 beaufschlagen, die im Ausführungsbeispiel als Leuchtdioden dargestellt sind. Für jede Unwuchtwinkelanzeige 23 bzw. 123 sind je fünf Leuchtdioden 53, 54, 55, 56, 57 bzw. 153, 154, 155, 156, 157 vorgesehen, die die richtige Eindrehlage des auszuwuchtenden Rotors 46 dann anzeigen, wenn die Leuchtdioden 55 bzw. 155 bei dem Wert Null aufleuchten. In diesem Falle steht der auszuwuchtende Rotor 46 entweder vor einer Bearbeitungsmaschine oder in einer wohl definierten Ausgleichslage für den den Ausgleich Durchzuführenden. Es darf noch einmal darauf hingewiesen werden, daß die Unwuchtwinkelanzeige 23 bzw. 123 auch andere Anzeigeelemente, wie die im Ausführungsbeispiel beschriebenen Leuchtdioden tragen kann und daß für die erste Ausgleichsebene 45 die Unwuchtwinkelanzeige 23 benutzt wird, während für die zweite Ausgleichsebene 145 die Unwuchtwinkellagenanzeige 123 vorgesehen ist.

**Patentanspruch**

Unwuchtmeßeinrichtung zur Bestimmung der Unwucht nach Lage und Größe für eine Auswuchtmaschine mit einem Antriebsmotor (49), Schwingungsumformern (1, 101), einer den auszuwuchtenden Rotor (46) tragenden Spindel (30), mit einer an dieser angeordneten Inkrementscheibe (31), mit einer Filterschaltung für Analogsignale zum Unterdrücken von Störsignalen durch Frequenzsteuerung mit einer hoch liegenden Steuerfrequenz, dadurch gekennzeichnet, daß ein besonderer Steuereingang (41 bzw. 141) der aus geschalteten Kondensatoren aufgebauten Filterschaltung, pro Umlauf der Inkrementscheibe (31) mit Impulsen aus jedem Inkrement (32) der Inkrementscheibe (31) angesteuert wird.

**Claim**

Imbalance measuring device for determining the imbalance as to position and value for a balancing machine with a driving motor (49), oscillation transformers (1, 101), a spindle (30) carrying the rotor (46) which is to be balanced, and having an increment disc (31) arranged thereon, with a filter circuit for analog signals for the suppression of interfering signals through frequency control at a high control frequency, characterised in that a particular control input (41 respectively 141) of the filter circuit, which is composed of circuit-connected condensers, is controlled per revolution of the increment disc (31) with impulses from each increment (32) of the increment disc (31).

**Revendication**

Dispositif de mesure de balourd pour déterminer un balourd selon sa position et sa grandeur destiné à une machine d'équilibrage comportant un moteur d'entraînement (49), des transformateurs d'oscillation (1, 101), une broche (30) portant le rotor (16) à équilibrer avec un disque de repères incrémentiels (31) disposé sur celle-ci, un montage filtre pour signaux analogiques, pour éliminer les signaux parasites par commande en fréquence, avec une fréquence de commande élevée, caractérisé par le fait qu'on attaque une entrée particulière de commande (41 ou 141) du montage filtre, constitué de condensateurs, à chaque rotation du disque à repères incrémentiels (31), avec des impulsions fournies par chaque repère (32) du disque à repères incrémentiels (31).

Fig. 1

Fig. 2